(19) **Europäisches Patentamt**
**European Patent Office**
**Office européen des brevets**

(11) **EP 2 572 031 B1**

(12) **FASCICULE DE BREVET EUROPEEN**

(45) Date de publication et mention
de la délivrance du brevet:
**28.01.2015 Bulletin 2015/05**

(21) Numéro de dépôt: **11717666.9**

(22) Date de dépôt: **06.05.2011**

(51) Int Cl.:
**D07B 1/16** *(2006.01)*     **D07B 1/06** *(2006.01)*

(86) Numéro de dépôt international:
**PCT/EP2011/057339**

(87) Numéro de publication internationale:
**WO 2011/144469 (24.11.2011 Gazette 2011/47)**

(54) **CABLE METALLIQUE A TROIS COUCHES, GOMME IN SITU PAR UN ELASTOMERE THERMOPLASTIQUE INSATURE**

**MIT EINEM UNGESÄTTIGTEN THERMOPLASTISCHEN ELASTOMER IN-SITU GUMMIERTES DREISCHICHTIGES METALLSEIL**

**TRIPLE-LAYERED METAL CORD RUBBERISED IN SITU BY AN UNSATURATED THERMOPLASTIC ELASTOMER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2010 FR 1053900**

(43) Date de publication de la demande:
**27.03.2013 Bulletin 2013/13**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **POTTIER, Thibaud**
**63040 Clermont-Ferrand Cedex 9 (FR)**
• **RIGO, Sébastien**
**63040 Clermont-Ferrand Cedex 9 (FR)**
• **TOUSSAIN, Jérémy**
**63040 Clermont-Ferrand Cedex 9 (FR)**

(74) Mandataire: **Desbordes, Guillaume et al**
**MANUFACTURE FRANCAISE DES PNEUMATIQUES MICHELIN**
**Place des Carmes-Déchaux**
**DGD/PI-F35/Ladoux**
**63040 Clermont-Ferrand Cedex (FR)**

(56) Documents cités:
EP-A2- 1 186 699     WO-A1-00/23505
WO-A1-2005/071157     WO-A1-2010/105975
JP-A- 2002 088 668     JP-A- 2007 303 043
US-B1- 6 579 940

**Description**

La présente invention est relative aux câbles métalliques à trois couches concentriques, utilisables notamment pour le renforcement d'articles en caoutchouc, plus particulièrement relative aux câbles métalliques à trois couches du type « gommés in situ », c'est-à-dire gommés de l'intérieur, pendant leur fabrication même, par du caoutchouc ou une composition de caoutchouc.

Elle se rapporte également à l'utilisation de tels câbles dans des pneumatiques et notamment dans leurs armatures de carcasse, encore appelées « carcasses », plus particulièrement au renforcement des carcasses de pneumatiques pour véhicules industriels.

Un pneumatique radial comporte de manière connue une bande de roulement, deux bourrelets inextensibles, deux flancs reliant les bourrelets à la bande de roulement et une ceinture disposée circonférentiellement entre l'armature de carcasse et la bande de roulement. Cette armature de carcasse est constituée de manière connue d'au moins une nappe (ou "couche") de caoutchouc renforcée par des éléments de renforcement ("renforts") tels que des câblés ou des monofilaments, généralement du type métalliques dans le cas de pneumatiques pour véhicules industriels.

Pour le renforcement des armatures de carcasse ci-dessus, on utilise généralement des câbles d'acier ("*steel cords*") dits "à couches" (*"layered cords"*) constitués d'une couche centrale et d'une ou plusieurs couches de fils concentriques disposées autour de cette couche centrale. Les câbles à trois couches les plus utilisés sont essentiellement des câbles de construction M+N+P, formés d'une couche centrale de M fil(s), M variant de 1 à 4, entourée d'une couche intermédiaire de N fils, N variant typiquement de 5 à 15, elle-même entourée d'une couche externe de P fils, P variant typiquement de 10 à 22, l'ensemble pouvant être éventuellement fretté par un fil de frette externe enroulé en hélice autour de la couche externe.

De manière bien connue, ces câbles à couches sont soumis à des contraintes importantes lors du roulage des pneumatiques, notamment à des flexions ou variations de courbure répétées induisant au niveau des fils des frottements, notamment par suite des contacts entre couches adjacentes, et donc de l'usure, ainsi que de la fatigue ; ils doivent donc présenter une haute résistance aux phénomènes dits de "fatigue-fretting".

Il est particulièrement important en outre qu'ils soient imprégnés autant que possible par le caoutchouc, que cette matière pénètre au mieux dans tous les espaces situés entre les fils constituant les câbles. En effet, si cette pénétration est insuffisante, il se forme alors des canaux ou capillaires vides, le long et à l'intérieur des câbles, et les agents corrosifs tels que l'eau ou même l'oxygène de l'air, susceptibles de pénétrer dans les pneumatiques par exemple à la suite de coupures de leur bande de roulement, cheminent le long de ces canaux vides jusque dans la carcasse du pneumatique. La présence de cette humidité joue un rôle important en provoquant de la corrosion et en accélérant les processus de dégradation ci-dessus (phénomènes dits de "fatigue-corrosion"), par rapport à une utilisation en atmosphère sèche.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour pallier les inconvénients ci-dessus, la demande WO 2005/071157 a proposé des câbles à trois couches de construction 1+N+P, en particulier de construction 1+6+12, dont une des caractéristiques essentielles est qu'une gaine constituée d'une composition de caoutchouc diénique recouvre au moins la couche intermédiaire constituée des N fils, le noyau du câble pouvant être lui-même recouvert ou non de caoutchouc. Grâce à cette architecture spécifique et le remplissage au moins partiel par le caoutchouc des capillaires ou interstices qui en découle, non seulement une excellente pénétrabilité par le caoutchouc est obtenue, limitant les problèmes de corrosion, mais encore les propriétés d'endurance en fatigue-fretting sont notablement améliorées par rapport aux câbles de l'art antérieur. La longévité des pneumatiques Poids-lourd et celle de leurs armatures de carcasse en sont ainsi très sensiblement améliorées.

Toutefois, les procédés décrits pour la fabrication de ces câbles, ainsi que les câbles qui en sont issus, ne sont pas dépourvus d'inconvénients.

Tout d'abord, ces câbles à trois couches sont obtenus en plusieurs étapes qui présentent l'inconvénient d'être discontinues, d'abord par réalisation d'un câble intermédiaire 1+N (en particulier 1+6), puis par gainage via une tête d'extrusion de ce câble intermédiaire ou toron d'âme, enfin par une opération finale de câblage des P fils restants autour du toron d'âme ainsi gainée, pour formation de la couche externe. Pour éviter le problème de "collant à cru" ou collant parasite inhérent à la gaine de caoutchouc diénique à l'état cru, avant câblage de la couche externe autour du toron d'âme, doit être utilisé en outre un film intercalaire en matière plastique lors des opérations intermédiaires de bobinage et débobinage. Toutes ces manipulations successives sont pénalisantes du point de vue industriel et antinomiques de la recherche de cadences de fabrication élevées.

D'autre part, si l'on veut pouvoir garantir un taux de pénétration élevé par le caoutchouc à l'intérieur du câble pour l'obtention d'une perméabilité à l'air du câble, selon son axe, qui soit aussi faible que possible, il s'est avéré nécessaire selon ces procédés de l'art antérieur, d'utiliser des quantités relativement importantes de caoutchouc lors du gainage. De telles quantités conduisent à un débordement parasite, plus ou moins prononcé, du caoutchouc cru à la périphérie du câble terminé de fabrication.

Or, comme cela a déjà été évoqué ci-dessus, en raison du fort pouvoir collant que possèdent les caoutchoucs diéniques à l'état cru, un tel débordement parasite génère à son tour des inconvénients notables lors de la manipulation ultérieure du câble, en particulier lors des opérations de calandrage qui vont suivre pour l'incorporation du câble à une bande de caoutchouc diénique elle-même à l'état cru, avant les opérations ultimes de fabrication du bandage pneumatique et de cuisson finale.

Tous les inconvénients exposés ci-dessus ralentissent bien entendu les cadences industrielles et pénalisent le coût final des câbles et des pneumatiques qu'ils renforcent.

Poursuivant leurs recherches, les Demanderesses ont découvert un câble à trois couches nouveau, gommé in situ par un caoutchouc spécifique, qui permet de pallier les inconvénients précités.

En conséquence, un premier objet de l'invention est un câble métallique à trois couches concentriques (C1, C2, C3) de construction M+N+P, comportant une première couche ou noyau (C1) de diamètre de constitué de M fil(s) de diamètre $d_1$, noyau autour duquel sont entourés ensemble en hélice selon un pas $p_2$, en une deuxième couche (C2), N fils de diamètre $d_2$, deuxième couche autour de laquelle sont entourés ensemble en hélice selon un pas $p_3$, en une troisième couche (C3), P fils de diamètre $d_3$, dans lequel au moins une partie des interstices du câble, situés d'une part entre le noyau et les N fils de la deuxième couche ainsi qu'entre les fils noyau eux-mêmes lorsque M est supérieur à 1, d'autre part entre les N fils de la deuxième couche et les P fils de la troisième couche, contiennent du caoutchouc ou une composition de caoutchouc, caractérisé en ce que ledit caoutchouc est un élastomère thermoplastique insaturé.

Ce câble à trois couches de l'invention, comparé aux câbles à trois couches gommés in situ de l'art antérieur, a pour avantage notable que le caoutchouc utilisé comme gomme de remplissage est un élastomère du type thermoplastique et non plus diénique, par définition thermofusible et donc plus facile de mise en oeuvre, dont la quantité peut être aisément contrôlée ; il est ainsi possible, en jouant sur la température de mise en oeuvre de l'élastomère thermoplastique, de répartir uniformément ce dernier à l'intérieur de chacun des interstices du câble, conférant à ce dernier une imperméabilité optimale selon son axe longitudinal.

En outre, l'élastomère thermoplastique ci-dessus ne pose pas de problème de collant parasite en cas d'un léger débordement à l'extérieur du câble après sa fabrication. Enfin, le caractère insaturé et donc (co)vulcanisable de cet élastomère thermoplastique insaturé offre au câble ainsi préparé une excellente compatibilité avec les matrices de caoutchoucs diéniques insaturés tels que du caoutchouc naturel, utilisées habituellement comme gomme de calandrage dans les tissus métalliques destinés au renforcement des pneumatiques.

L'invention concerne également l'utilisation d'un câble conforme à l'invention pour le renforcement d'articles finis ou de produits semi-finis en caoutchouc, par exemple des nappes, des tuyaux, des courroies, des bandes transporteuses, des pneumatiques.

Le câble de l'invention est tout particulièrement destiné à être utilisé comme élément de renforcement d'une armature de carcasse de pneumatiques de véhicules industriels (porteurs de lourdes charges) choisis parmi camionnettes et véhicules dits "Poids-lourd" c'est-à-dire véhicules métro, bus, engins de transport routier tels que camions, tracteurs, remorques, ou encore véhicules hors-la-route, engins agricoles ou de génie civil, et tout autre type de véhicules de transport ou de manutention.

L'invention concerne en outre ces articles finis ou produits semi-finis en caoutchouc eux-mêmes lorsqu'ils sont renforcés par un câble conforme à l'invention, en particulier les pneumatiques destinés aux véhicules industriels tels que camionnettes ou Poids-lourd.

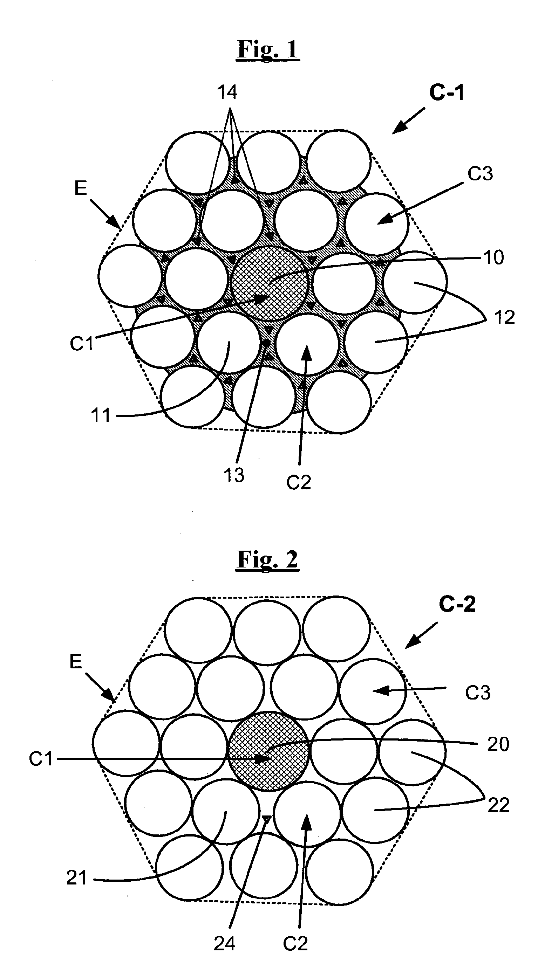

L'invention ainsi que ses avantages seront aisément compris à la lumière de la description et des exemples de réalisation qui suivent, ainsi que des figures 1 à 4 relatives à ces exemples qui schématisent, respectivement :

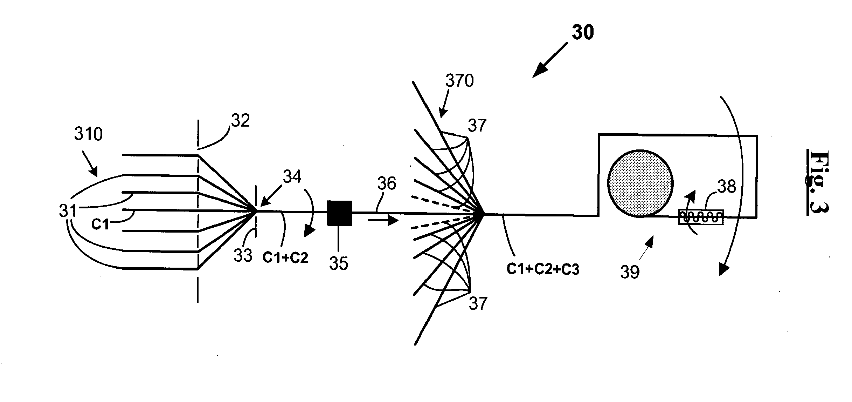

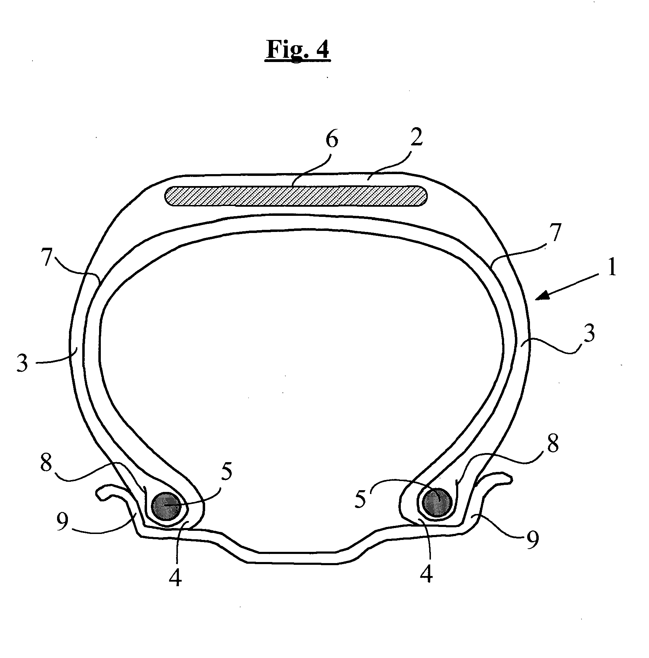

- en coupe transversale, un câble de construction 1+6+12 conforme à l'invention, gommé in situ, du type compact (Fig. 1) ;
- en coupe transversale, un câble de construction 1+6+12 conventionnel, non gommé in situ, également du type compact (Fig. 2) ;
- un exemple d'installation de retordage et gommage in situ utilisable pour la fabrication de câbles du type compacts, conformes à l'invention (Fig. 3) ;
- en coupe radiale, une enveloppe de pneumatique Poids-lourd à armature de carcasse radiale, conforme ou non à l'invention dans cette représentation générale (Fig. 4).

**I. MESURES ET TESTS**

I-1. Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

Concernant les compositions de caoutchouc diénique, les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté E10 et exprimé en MPa (conditions normales de température et d'hygrométrie selon la norme ASTM D 1349 de 1999).

I-2. Test de perméabilité à l'air

Ce test permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est ici réalisé soit sur des câbles extraits des pneumatiques ou des nappes de caoutchouc qu'ils renforcent, donc déjà enrobés de l'extérieur par du caoutchouc à l'état cuit, soit sur des câbles bruts de fabrication.

Dans le second cas, les câbles bruts doivent être préalablement enrobés de l'extérieur par une gomme dite d'enrobage. Pour cela, une série de 10 câbles disposés parallèlement (distance inter-câble : 20 mm) est placée entre deux couches ou *"skims"* (deux rectangles de 80 x 200 mm) d'une composition de caoutchouc diénique à l'état cru, chaque skim ayant une épaisseur de 3,5 mm ; le tout est alors bloqué dans un moule, chacun des câbles étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions 7x7x20 mm, pour caractérisation.

On utilise comme gomme d'enrobage une composition de caoutchouc diénique conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la gomme d'enrobage est de 10 MPa environ.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm$^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm$^3$/min, les valeurs mesurées inférieures ou égales à 0,2 cm$^3$/min sont considérées comme nulles ; elles correspondent à un câble qui peut être qualifié d'étanche (totalement étanche) à l'air selon son axe (i.e., dans sa direction longitudinale).

I-3. Taux de gomme de remplissage

La quantité de gomme de remplissage est mesurée par différence entre le poids du câble initial (donc gommé in situ) et le poids du câble (donc celui de ses fils) dont la gomme de remplissage a été éliminée par un traitement dans un solvant d'extraction approprié.

On procède par exemple comme suit. Un échantillon de câble de longueur donnée (par exemple un mètre), bobiné sur lui-même pour réduire son encombrement, est placé dans un flacon étanche contenant un litre de toluène. Puis le flacon est agité (125 aller-retour par min) pendant 24 heures à température ambiante (20°C), à l'aide d'un agitateur "va-et-vient" ("Ping-Pong 400" de la société Fischer Scientific) ; après élimination du solvant, l'opération est répétée une fois. Le câble ainsi traité est récupéré et le solvant résiduel évaporé sous vide pendant 1 heure à 60°C. Puis le câble ainsi débarrassé de sa gomme de remplissage est pesé. On en déduit par le calcul le taux de gomme de remplissage dans le câble, exprimé en mg (milligramme) de gomme de remplissage par g (gramme) de câble initial, et moyenné sur 10 mesures (c'est-à-dire sur 10 mètres de câble au total).

II. DESCRIPTION DETAILLEE DE L'INVENTION

Dans la présente description, sauf indication expresse différente, tous les pourcentages (%) indiqués sont des % massiques.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

II-1. Câble de l'invention

Le câble métallique de l'invention comporte donc trois couches concentriques :

- une première couche ou couche centrale (C1) de diamètre $d_c$ constitué de M fil(s) de diamètre $d_1$ ;
- une deuxième couche (C2) comportant N fils de diamètre $d_2$ enroulés ensemble en hélice, selon un pas $p_2$, autour de la première couche ;
- une troisième couche (C3) comportant P fils de diamètre de diamètre $d_3$ enroulés ensemble en hélice, selon un pas $p_3$, autour de la deuxième couche.

Par définition, dans la présente demande, la première couche ou couche centrale (C1) est aussi appelée le noyau ("*corse*") du câble, alors que la première (C1) et la deuxième (C2) couches une fois assemblées (C1+C2) constituent ce que l'on a coutume d'appeler le toron d'âme du câble. Lorsque M est supérieur à 1, il faut bien entendu comprendre que le diamètre $d_c$ du noyau (C1) représente alors le diamètre du cylindre de révolution imaginaire (ou diamètre d'encombrement) qui entoure les M fils centraux de diamètre $d_1$.

Ce câble de l'invention peut être qualifié de câble gommé in situ, c'est-à-dire qu'il est gommé de l'intérieur, pendant sa fabrication même, par du caoutchouc ou une composition de caoutchouc dénommé(e) gomme de remplissage.

En d'autres termes, à l'état brut de fabrication, ses "capillaires" ou "interstices" (les deux termes, interchangeables, désignant les espaces vides, libres, formés par des fils adjacents, en l'absence de gomme de remplissage), pour une partie ou préférentiellement la totalité d'entre eux, situés d'une part entre le ou les M fil(s) noyau (C1) et les N fils de la seconde couche (C2), d'autre part entre les N fils de la seconde couche (C2) et les P fils de la troisième couche (C3), voire entre les M fils noyau eux-mêmes lorsque M est supérieur à 1, comportent déjà un caoutchouc spécifique à titre de gomme de remplissage qui remplit au moins en partie lesdits interstices, de manière continue ou non selon l'axe du câble. Par câble à l'état brut de fabrication, on entend bien entendu un câble qui n'a pas encore été mis au contact d'une matrice de caoutchouc diénique (e.g. caoutchouc naturel) d'un produit semi-fini ou d'un article fini en caoutchouc tel qu'un pneumatique, que ledit câble de l'invention serait destiné à renforcer ultérieurement.

Ce caoutchouc spécifique est un élastomère thermoplastique insaturé, utilisé seul ou avec d'éventuels additifs (c'est-à-dire dans ce cas sous forme d'une composition d'élastomère thermoplastique insaturé) pour constituer la gomme de remplissage.

On rappellera tout d'abord ici que les élastomères thermoplastiques (en abrégé "TPE") sont des élastomères thermoplastiques se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés.

C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE.

Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Ceci étant rappelé, une caractéristique essentielle de l'élastomère TPE utilisé dans le renfort composite de l'invention est qu'il est insaturé. Par élastomère TPE insaturé, on entend par définition et de manière bien connue un élastomère TPE qui est pourvu d'insaturations éthyléniques, c'est-à-dire qui comporte des doubles liaisons carbonecarbone (conjuguées ou non) ; réciproquement, un élastomère TPE dit saturé est bien entendu un élastomère TPE qui est dépourvu de telles doubles liaisons.

Le caractère insaturé de l'élastomère TPE insaturé fait que ce dernier est (co)réticulable, (co)vulcanisable au soufre, ce qui le rend avantageusement compatible avec les matrices de caoutchoucs diéniques insaturés, telles que celles à base de caoutchouc naturel, utilisées habituellement comme gomme de calandrage dans les tissus métalliques destinés au renforcement des pneumatiques. Ainsi, un éventuel débordement de la gomme de remplissage à l'extérieur du câble, lors de la fabrication de ce dernier, ne sera pas préjudiciable à son adhésion ultérieure à la gomme de calandrage dudit tissu métallique, ce défaut étant en effet susceptible d'être corrigé lors de la cuisson finale du pneumatique par la co-réticulation possible entre l'élastomère TPE insaturé et l'élastomère diénique de la gomme de calandrage.

De préférence, l'élastomère TPE insaturé est un élastomère thermoplastique styrénique (en abrégé "TPS") c'est-à-dire comportant, à titre de blocs thermoplastiques, des blocs styrène (polystyrène).

Plus préférentiellement, l'élastomère TPS insaturé est un copolymère comportant des blocs polystyrène (c'est-à-dire formés de monomère styrénique polymérisé) et des blocs polydiène (c'est-à-dire formés de monomère diénique polymérisé), préférentiellement parmi ces derniers des blocs polyisoprène et/ou des blocs polybutadiène.

Par blocs polydiène, notamment polyisoprène et blocs polybutadiène, on entend également par extension, dans la présente demande, des blocs de copolymère diène statistique, notamment d'isoprène ou de butadiène comme par exemple des blocs de copolymère statistique styrène/ isoprène (SI) ou styrène-butadiène (SB), ces blocs polydiène étant particulièrement associés à des blocs thermoplastiques polystyrène pour constituer les élastomères TPS insaturés qui ont été décrits précédemment.

Par monomère styrénique doit être entendu tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'ochlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'obromostyrène, le m-bromostyrène, le p-bromostyrène, le 2,4-dibromostyrène, le 2,6-dibromostyrène ou les 2,4,6-tribromostyrène), les fluorostyrènes (par exemple l'ofluorostyrène, le m-fluorostyrène, le p-fluorostyrène, le 2,4-difluorostyrène, le 2,6-difluorostyrène ou les 2,4,6-trifluorostyrène), le para-hydroxy-styrène, et les mélanges de tels monomères.

Par monomère diénique doit être entendu tout monomère porteur de deux doubles liaisons carbone-carbone, conjuguées ou non, en particulier tout monomère diène conjugué ayant de 4 à 12 atomes de carbone choisi notamment dans le groupe constitué par l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène, et les mélanges de tels monomères.

Un tel élastomère TPS insaturé est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement encore, cet élastomère TPS insaturé est un copolymère comportant au moins trois blocs, ce copolymère étant plus particulièrement choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Selon un mode de réalisation particulier et préférentiel de l'invention, le taux de styrène, dans l'élastomère TPS insaturé ci-dessus est compris entre 5 et 50%. En dessous de 5%, le caractère thermoplastique de l'élastomère TPS risque d'être insuffisant tandis qu'au-delà de 50% il existe un risque d'une part de rigidification excessive de ce dernier et d'autre part d'une diminution de son aptitude à la (co)réticulation.

Selon un autre mode de réalisation particulier et préférentiel de l'invention, la masse moléculaire moyenne en nombre (notée Mn) de l'élastomère TPE (notamment TPS) est préférentiellement comprise entre 5 000 et 500 000 g/mol, plus préférentiellement comprise entre 7 000 et 450 000. La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 $\mu$m avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 $\mu$l. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Selon un autre mode de réalisation particulier et préférentiel de l'invention, la Tg de l'élastomère TPE (notamment TPS) insaturé (pour rappel, première Tg relative à la séquence élastomère) est inférieure à 0°C, plus particulièrement inférieure à -15°C, cette grandeur étant mesurée de manière connue par DSC (*Differential Scanning Calorimetry*), par exemple selon la norme ASTM D3418-82.

Selon un autre mode de réalisation particulier et préférentiel de l'invention, la dureté Shore A (mesurée selon ASTM D2240-86) de l'élastomère TPE (notamment TPS) insaturé est comprise entre 10 et 100, plus particulièrement comprise dans un domaine de 20 à 90.

Des élastomères TPS insaturés tels que par exemple SB, SI, SBS, SIS, SBBS ou SBIS sont bien connus et disponibles commercialement, par exemple auprès de la société Kraton sous la dénomination "Kraton D" (e.g., produits D1161, D1118, D1116, D1163), auprès de la société Dynasol sous la dénomination "Calprene" (e.g., produits C405, C411, C412), auprès de la société Polimeri Europa sous la dénomination "Europrene" (e.g., produit SOLT166), auprès de la société BASF sous dénomination "Styroflex" (e.g., produit 2G66), ou encore auprès de la société Asahi sous la dénomination "Tuftec" (e.g., produit P1500).

L'élastomère thermoplastique insaturé précédemment décrit est suffisant à lui seul pour que la gomme de remplissage remplisse totalement sa fonction d'obturation des capillaires ou interstices du câble de l'invention. Toutefois, divers autres additifs peuvent être ajoutés, typiquement en faible quantité (préférentiellement à des taux pondéraux inférieurs à 20 parties, plus préférentiellement inférieurs à 10 parties pour 100 parties d'élastomère thermoplastique insaturé), comme par exemple des plastifiants, des charges renforçantes tels que du noir de carbone ou de la silice, des charges non renforçantes ou inertes, des charges lamellaires, des agents de protection tels que des anti-oxydants ou anti-ozonants, divers autres stabilisants, des agents colorants destinés par exemple à colorer la gomme de remplissage. La gomme de remplissage pourrait aussi comporter, selon une fraction pondérale minoritaire par rapport à la fraction d'élastomère thermoplastique insaturé, des polymères ou élastomères autres que des élastomères thermoplastiques insaturés.

L'invention concerne bien entendu le câble précédemment décrit tant à l'état réticulé (ou vulcanisé) qu'à l'état non réticulé (ou non vulcanisé). On préfère toutefois utiliser le câble de l'invention avec une gomme de remplissage à l'état non réticulé jusqu'à son incorporation ultérieure dans le produit semi-fini ou produit fini tel que pneumatique auquel il est destiné, de manière à favoriser la liaison au cours de la réticulation ou vulcanisation finale entre la gomme de remplissage et la matrice de caoutchouc environnante (par exemple la gomme de calandrage).

La figure 1 schématise, en coupe perpendiculaire à l'axe du câble (supposé rectiligne et au repos), un exemple d'un câble préférentiel 1+6+12 conforme à l'invention dans lequel le noyau ou couche centrale (C1) est constitué d'un seul fil.

Ce câble (noté C-1) est du type compact, c'est-à-dire que ses deuxième et troisième couches (respectivement C2 et C3) sont enroulées dans le même sens (S/S ou Z/Z selon une nomenclature reconnue) et de plus au même pas ($p_2 = p_3$). Ce type de construction a pour conséquence que les fils (11, 12) de ces deuxième et troisième couches (C2, C3) forment autour du noyau ou première couche (C1) deux couches sensiblement concentriques qui ont chacune un contour (E) (représenté en pointillés) qui est sensiblement polygonal (plus précisément hexagonal) et non cylindrique comme dans le cas de câbles à couches dits cylindriques.

La gomme de remplissage (13) remplit chaque capillaire (14) (symbolisé par un triangle) formé par les fils adjacents (pris trois à trois) des différentes couches (C1, C2, C3) du câble, en écartant ces derniers très légèrement. On voit que ces capillaires ou interstices sont naturellement formés soit par le fil noyau (10) et les fils (11) de la deuxième couche (C2) qui l'entourent, soit par deux fils (11) de la deuxième couche (C2) et un fil (13) de la troisième couche (C3) qui leur est immédiatement adjacent, soit encore par chaque fil (11) de la deuxième couche (C2) et les deux fils (12) de la troisième couche (C3) qui lui sont immédiatement adjacents ; au total, 24 capillaires ou interstices (14) sont ainsi présents dans ce câble 1+6+12.

Selon un mode de réalisation préférentiel, dans le câble conforme à l'invention, la gomme de remplissage s'étend d'une manière continue autour de la deuxième couche (C2) qu'elle recouvre.

Pour comparaison, la figure 2 rappelle la coupe d'un câble 1+6+12 (noté C-2) conventionnel (i.e., non gommé in situ), également du type compact. L'absence de gomme de remplissage fait que pratiquement tous les fils (20, 21, 22) sont au contact l'un de l'autre, ce qui conduit à une structure particulièrement compacte, par ailleurs très difficilement pénétrable (pour ne pas dire impénétrable) de l'extérieur par du caoutchouc. La caractéristique de ce type de câble est que les différents fils forment trois à trois des canaux ou capillaires (24) qui pour un nombre important d'entre eux restent fermés et vides et donc propices, par effet "de mèche", à la propagation de milieux corrosifs tels que l'eau.

Le câble de l'invention pourrait être pourvu d'une frette externe, constituée par exemple d'un fil unique, métallique ou non, enroulé en hélice autour du câble selon un pas plus court que celui de la couche externe (C3), et un sens d'enroulement opposé ou identique à celui de cette couche externe. Cependant, grâce à sa structure spécifique, le câble de l'invention, déjà auto-fretté, ne nécessite généralement pas l'emploi d'un fil de frette externe, ce qui résout avantageusement les problèmes d'usure entre la frette et les fils de la couche la plus externe du câble.

Toutefois, si un fil de frette est utilisé, dans le cas général où les fils de la couche externe sont en acier au carbone, on pourra alors avantageusement choisir un fil de frette en acier inoxydable afin de réduire l'usure par fretting de ces fils en acier au carbone au contact de la frette en acier inoxydable, comme enseigné par exemple dans la demande WO-A-98/41682, le fil en acier inoxydable pouvant être éventuellement remplacé, de manière équivalente, par un fil composite dont seule la peau est en acier inoxydable et le coeur en acier au carbone, tel que décrit par exemple dans le document EP-A-976 541. On peut également utiliser une frette constituée d'un polyester ou d'un polyester-amide aromatique thermotrope, telle que décrite dans la demande WO-A-03/048447.

Selon un mode de réalisation préférentiel, sur toute longueur de câble d'au moins 2 cm, l'élastomère TPS insaturé est présent dans chacun des capillaires situés d'une part entre le noyau (C1) et les N fils de la seconde couche (C2) ainsi qu'entre les fils noyau eux-mêmes lorsque M est supérieur à 1, d'autre part entre les N fils de la seconde couche (C2) et les P fils de la troisième couche (C3).

Selon un autre mode de réalisation préférentiel, le taux de gomme de remplissage dans le câble de l'invention est compris entre 5 et 40 mg de gomme par g de câble. En dessous du minimum indiqué, il est plus difficile de garantir que la gomme de remplissage soit bien présente, au moins en partie, dans chacun des interstices ou capillaires du câble, tandis qu'au-delà du maximum indiqué, on s'expose à un risque de débordement excessif de la gomme de remplissage à la périphérie du câble. Pour toutes ces raisons, on préfère que le taux de gomme de remplissage soit compris entre 5 et 35 mg, notamment entre 5 et 30 mg, plus particulièrement dans un domaine de 10 à 25 mg par g de câble.

Selon un autre mode de réalisation particulièrement préférentiel, sur toute portion de câble de longueur égale à 2 cm, chaque capillaire ou interstice du câble de l'invention comporte au moins un bouchon de gomme qui obstrue ce capillaire ou interstice de telle manière que, au test de perméabilité à l'air selon le paragraphe I-2, ce câble de l'invention présente un débit d'air moyen inférieur à 2 $cm^3$/min, plus préférentiellement inférieur à 0,2 $cm^3$/min ou au plus égal à 0,2 $cm^3$/min.

Selon un autre mode de réalisation préférentiel, dans le câble de l'invention, le noyau ou couche centrale (C1) de diamètre $d_c$ est constitué de 1 à 4 fils de diamètre $d_1$ (c'est-à-dire que M est compris dans un domaine 1 à 4), N est compris dans un domaine de 5 à 15, et P est compris dans un domaine de 10 à 22.

Préférentiellement, le câble de l'invention présente en outre les caractéristiques suivantes ($d_1$, $d_2$, $d_3$, $p_2$ et $p_3$ étant exprimés en mm) :

- $0,08 \leq d_1 \leq 0,40$ ;
- $0,08 \leq d_2 \leq 0,35$ ;
- $0,08 \leq d_3 \leq 0,35$ ;
- $5 \pi (d_1 + d_2) < p_2 \leq p_3 < 10 \pi (d_1 + 2d_2 + d_3)$.

Le noyau (C1) du câble de l'invention est préférentiellement constitué d'un seul fil unitaire ou au plus de 2 ou 3 fils, ces derniers pouvant être par exemple parallèles ou bien retordus ensemble. Toutefois, plus préférentiellement, le noyau (C1) du câble de l'invention est constitué d'un seul fil, N est compris dans un domaine de 5 à 7, et P est compris dans un domaine de 10 à 14.

Pour un compromis optimisé entre résistance, faisabilité, rigidité et endurance en flexion du câble, on préfère que les diamètres des fils des couches C1, C2 et C3, que ces fils aient un diamètre identique ou non d'une couche à l'autre, vérifient les relations suivantes ($d_1$, $d_2$, $d_3$ étant exprimés en mm):

- $0,10 \leq d_1 \leq 0,35$ ;
- $0,10 \leq d_2 \leq 0,30$ ;
- $0,10 \leq d_3 \leq 0,30$.

Plus préférentiellement encore, les relations suivantes sont vérifiées :

- $0,10 \leq d_1 \leq 0,28$ ;
- $0,10 \leq d_2 \leq 0,25$ ;
- $0,10 \leq d_3 \leq 0,25$.

Selon un autre mode de réalisation particulier, les caractéristiques suivantes sont vérifiées :

- pour N = 5 : $0,6 < (d_1 / d_2) < 0,9$ ;
- pour N = 6 : $0,9 < (d_1 / d_2) < 1,3$ ;
- pour N = 7: $1,3 < (d_1 / d_2) < 1,6$.

Les fils des couches C2 et C3 peuvent avoir un diamètre identique ou différent d'une couche à l'autre ; on utilise de préférence des fils de même diamètre d'une couche à l'autre (soit $d_1 = d_2 = d_3$), ce qui simplifie notamment la fabrication et réduit le coût des câbles.

De préférence, on a la relation suivante qui est vérifiée:

$$5 \pi (d_1 + d_2) < p_2 \leq p_3 < 5 \pi (d_1 + 2d_2 + d_3).$$

On rappelle ici que de manière connue le pas « p » représente la longueur, mesurée parallèlement à l'axe du câble, au bout de laquelle un fil ayant ce pas effectue un tour complet autour dudit axe du câble.

Les pas $p_2$ et $p_3$ sont choisis plus préférentiellement dans un domaine de 5 à 30 mm, plus préférentiellement encore dans un domaine de 5 à 20 mm, en particulier lorsque $d_2 = d_3$.

Lorsque le noyau (C1) est constitué de plus d'un fil (M supérieur à 1), les M fils sont de préférence assemblés, notamment retordus, selon un pas $p_1$ qui est plus préférentiellement compris dans un domaine de 3 à 30 mm, en particulier dans un domaine de 3 à 20 mm.

Selon un autre mode de réalisation préférentiel, les $p_2$ et $p_3$ sont égaux. C'est notamment le cas pour des câbles à couches du type compacts tels que schématisés par exemple à la figure 1, dans lesquels les deux couches C2 et C3 ont pour autre caractéristique d'être enroulées dans le même sens de torsion (S/S ou Z/Z). Dans de tels câbles à couches dits compacts, la compacité est très élevée, telle que la section transversale de ces câbles a un contour qui est polygonal et non cylindrique, comme illustré à titre d'exemple à la figure 1 (câble compact 1+6+12 conforme à l'invention) ou à la figure 2 (câble compact 1+6+12 témoin, c'est-à-dire non gommé in situ).

La troisième couche ou couche externe C3 a pour caractéristique préférentielle d'être une couche saturée, c'est-à-dire que, par définition, il n'existe pas suffisamment de place dans cette couche pour y ajouter au moins un $(P_{max}+1)$ème fil de diamètre $d_3$, $P_{max}$ représentant le nombre maximal de fils enroulables en une couche autour de la deuxième couche C2. Cette construction a pour avantage notable de limiter encore le risque de débordement de gomme de remplissage à sa périphérie et d'offrir, pour un diamètre donné du câble, une résistance plus élevée.

Ainsi, le nombre P de fils peut varier dans une très large mesure selon le mode de réalisation particulier de l'invention, étant entendu que le nombre maximal de fils P sera augmenté si leur diamètre $d_3$ est réduit comparativement au diamètre $d_2$ des fils de la deuxième couche, afin de conserver préférentiellement la couche externe dans un état saturé.

Selon un mode plus préférentiel, la couche C3 comporte de 10 à 14 fils ; sont particulièrement sélectionnés parmi les câbles ci-dessus ceux constitués de fils ayant sensiblement le même diamètre de la couche C2 à la couche C3 (soit $d_2 = d_3$).

Selon un mode de réalisation particulièrement préférentiel, la première couche (C1) comporte un seul fil (M égal à 1), la deuxième couche (C2) comporte 6 fils (N égal à 6) et la troisième couche (C3) comporte 11 ou 12 fils (P égal à 11 ou 12) ; en d'autres termes, le câble de l'invention a pour constructions préférentielles 1+6+11 ou 1+6+12. Parmi ces câbles sont en particulier préférés ceux constitués de fils ayant sensiblement le même diamètre de la deuxième couche (C2) à la troisième couche (C3) (soit $d_2 = d_3$).

Le câble de l'invention, comme tous les câbles à couches, peut être de deux types, à savoir du type à couches compactes ou du type à couches cylindriques.

Préférentiellement, les deux couches C2 et C3, ainsi que la couche C1 dans le cas où M est supérieur à 1, sont enroulées dans le même sens de torsion, c'est-à-dire soit dans la direction S (disposition "S/S"), soit dans la direction Z (disposition "Z/Z"). L'enroulement dans le même sens de ces couches permet avantageusement de minimiser les frottements entre ces deux couches et donc l'usure des fils qui les constituent. Plus préférentiellement, elles sont enroulées dans le même sens de torsion et au même pas (soit $p_2 = p_3$ ou $p_1 = p_2 = p_3$ si M est supérieur à 1), pour l'obtention d'un câble du type compact tel que représenté par exemple à la figure 1.

Par câble métallique, on entend par définition dans la présente demande un câble formé de fils constitués majoritairement (c'est-à-dire pour plus de 50% en nombre de ces fils) ou intégralement (pour 100% des fils) d'un matériau métallique.

Indépendamment les uns des autres et d'une couche à l'autre, le ou les M fil(s) du noyau (C1), les N fils de la deuxième couche (C2) et les P fils de la troisième couche (C3) sont de préférence en acier, plus préférentiellement en acier au carbone. Mais il est bien entendu possible d'utiliser d'autres aciers, par exemple un acier inoxydable, ou d'autres alliages.

Lorsqu'un acier au carbone est utilisé, sa teneur en carbone (% en poids d'acier) est de préférence comprise entre 0,2% et 1,2%, notamment entre 0,5% et 1,1% ; ces teneurs représentent un bon compromis entre les propriétés mécaniques requises pour le pneumatique et la faisabilité des fils. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les câbles de l'invention sont préférentiellement en acier au carbone et possèdent une résistance en traction (Rm) de préférence supérieure à 2500 MPa, plus préférentiellement supérieure à 3000 MPa. L'allongement total à la rupture (At) du câble, somme de ses allongements structural, élastique et plastique, est de préférence supérieur à 2,0%, plus préférentiellement au moins égal à 2,5%.

II-2. Fabrication du câble de l'invention

Le câble à trois couches (C1+C2+C3) de l'invention précédemment décrit peut être fabriqué selon un procédé comportant au moins les étapes suivantes :

- une étape d'assemblage des N fils de la deuxième couche (C2) autour du noyau (C1), pour formation en un point, dit «point d'assemblage» d'un câble intermédiaire dit « toron d'âme » de construction C1+C2 (ou M+N) ;
- en amont et/ou en aval dudit point d'assemblage, une étape de gainage du noyau et/ou du toron d'âme par l'élastomère thermoplastique insaturé, extrudé à l'état fondu ;
- puis une étape d'assemblage des P fils de la troisième couche (C3) autour du toron d'âme (C1+C2) ainsi gainé.

Bien entendu, lorsque M est supérieur à 1, ledit procédé comporte une étape préalable d'assemblage (quelle que soit la direction, S ou Z) des M fils de la couche centrale (C1).

On rappellera ici qu'il existe deux techniques possibles d'assemblage de fils métalliques :

- soit par câblage : dans un tel cas, les fils ne subissent pas de torsion autour de leur propre axe, en raison d'une rotation synchrone avant et après le point d'assemblage ;
- soit par retordage : dans un tel cas, les fils subissent à la fois une torsion collective et une torsion individuelle autour de leur propre axe, ce qui génère un couple de détorsion sur chacun des fils et sur le câble lui-même.

Les deux techniques ci-dessus son applicables, bien que l'on utilise préférentiellement une étape de retordage pour chacune des étapes d'assemblage ci-dessus.

En aval du « point d'assemblage » défini ci-dessus, la contrainte de tension exercée sur le toron d'âme est de préférence comprise entre 10 et 25% de sa force à la rupture.

Dans le procédé ci-dessus, la gomme dite de remplissage est donc introduite in situ dans le câble en cours de fabrication, par gainage soit du noyau seul, soit du toron d'âme seul, soit à la fois du noyau et du toron d'âme, ledit gainage étant opéré de manière connue par exemple par passage à travers au moins une (c'est-à-dire une ou plusieurs) tête(s) d'extrusion délivrant la gomme de remplissage à l'état fondu.

La tête ou chaque tête d'extrusion est portée à une température appropriée, ajustable aisément en fonction de la nature spécifique de l'élastomère TPE utilisé et de ses propriétés thermiques. De préférence, la température d'extrusion de l'élastomère TPE insaturé est comprise entre 100°C et 250°C, plus préférentiellement entre 150°C et 200°C. Typiquement, la tête d'extrusion définit une zone de gainage ayant par exemple la forme d'un cylindre de révolution dont le diamètre est compris de préférence entre 0,15 mm et 1,2 mm, plus préférentiellement entre 0,20 et 1,0 mm, et dont la longueur est de préférence comprise entre 1 et 10 mm.

L'élastomère TPE insaturé à l'état fondu recouvre ainsi le noyau et/ou toron d'âme par le biais de la tête de gainage, à une vitesse de défilement typiquement de quelques mètres à quelques dizaines de m/min, pour un débit de pompe d'extrusion typiquement de plusieurs $cm^3$/min à plusieurs dizaines de $cm^3$/min. Le noyau ou le toron d'âme, selon le cas applicable, est avantageusement préchauffé avant passage dans la tête d'extrusion, par exemple par passage à travers un générateur HF ou à travers un tunnel chauffant.

Selon un premier mode de réalisation préférentiel, le gainage est réalisé sur le noyau (C1) seul, c'est-à-dire en amont du point d'assemblage des N fils de la deuxième couche (C2) autour du noyau ; dans un tel cas, le noyau une fois gainé est recouvert d'une épaisseur minimale d'élastomère TPE insaturé qui est de préférence supérieure à 20 $\mu$m, typiquement comprise entre 20 et 100 $\mu$m, en quantité suffisante pour pouvoir enrober ultérieurement les fils de la deuxième couche (C2) du câble une fois cette deuxième couche mise en place.

Puis les N fils de la deuxième couche (C2) sont câblés ou retordus ensemble (direction S ou Z) autour du noyau (C1) pour formation du toron d'âme (C1+C2), de manière connue en soi ; les fils sont délivrés par des moyens d'alimentation tels que des bobines, une grille de répartition, couplée ou non à un grain d'assemblage, destinés à faire converger autour du noyau les N fils en un point de torsion commun (ou point d'assemblage).

Selon un autre mode de réalisation préférentiel, le gainage est réalisé sur le toron d'âme (C1+C2) lui-même, c'est-à-dire en aval (et non plus en amont) du point d'assemblage des N fils de la deuxième couche (C2) autour du noyau ; dans un tel cas, le toron d'âme une fois gainé est recouvert d'une épaisseur minimale d'élastomère TPE insaturé qui est préférentiellement supérieure à 5 $\mu$m, typiquement comprise entre 5 et 30 $\mu$m.

Ainsi, dans les deux cas préférentiels ci-dessus (gainage soit du noyau, soit du toron d'âme), la gomme de remplissage peut être délivrée en un point fixe, unique et de faible encombrement, au moyen d'une tête d'extrusion unique.

Toutefois, le gommage in situ du câble de l'invention pourrait être réalisé également en deux opérations successives de gainage, une première opération de gainage sur le noyau (donc en amont du point d'assemblage) et une seconde opération de gainage sur le toron d'âme (donc en aval du point d'assemblage).

Préférentiellement, toutes les étapes décrites ci-dessus sont opérées en ligne et en continu, quel que soit le type de câble fabriqué (câble compact comme câble à couches cylindriques), tout ceci à haute vitesse. Le procédé ci-dessus peut être mis en oeuvre à une vitesse (vitesse de défilement du câble sur la ligne de fabrication) supérieure à 50 m/min, préférentiellement supérieure à 70 m/min, notamment supérieure à 100 m/min.

Mais il est bien entendu également possible de fabriquer le câble de l'invention en discontinu, par exemple par gainage préalable du toron d'âme (C1+C2), solidification de la gomme de remplissage puis bobinage et stockage de ce dernier avant l'opération finale d'assemblage de la troisième et dernière couche (C3) ; la solidification de la gaine élastomère est aisée, elle peut être conduite par tout moyen de refroidissement approprié, par exemple par un refroidissement à l'air ou à l'eau, suivi dans ce dernier cas d'une opération de séchage.

Au cours d'une troisième étape, on procède à l'assemblage final, par câblage ou retordage (direction S ou Z), des P fils de la troisième couche ou couche externe (C3) autour du toron d'âme (M+N ou C1+C2). Au cours de cet assemblage final, les P fils viennent s'appuyer sur la gomme de remplissage à l'état fondu, s'incruster dans cette dernière. La gomme de remplissage, en se déplaçant sous la pression exercée par ces P fils externes, a alors naturellement tendance à pénétrer dans chacun des interstices ou cavités laissés vides par les fils, entre le toron d'âme (C1+C2) et la couche externe (C3).

A ce stade, la fabrication du câble de l'invention est terminée. Toutefois, lorsque, conformément à un mode de réalisation préférentiel de l'invention, les différentes couches du câble sont assemblées par retordage, on préfère alors ajouter une étape d'équilibrage de torsion pour obtention d'un câble dit équilibré en torsion ; par "équilibrage de torsion", on entend ici de manière connue l'annulation des couples de torsion résiduels (ou du retour élastique de détorsion) s'exerçant sur le câble. Les outils d'équilibrage de la torsion sont bien connus de l'homme du métier du retordage ; ils peuvent consister par exemple en des dresseurs et/ou des retordeurs et/ou des retordeurs-dresseurs constitués soit de poulies pour les retordeurs, soit de galets de petit diamètre pour les dresseurs, poulies et/ou galets à travers lesquels circule le câble.

Préférentiellement, dans ce câble de l'invention ainsi terminé, l'épaisseur de gomme de remplissage entre deux fils adjacents du câble, quels qu'ils soient, varie de 1 à 10 $\mu$m. Ce câble peut être enroulé sur une bobine de réception, pour stockage, avant d'être traité par exemple à travers une installation de calandrage, pour préparation d'un tissu composite métal-caoutchouc utilisable par exemple comme armature de carcasse, ou encore comme armature de sommet de pneumatique.

Le procédé précédemment décrit rend possible la fabrication de câbles qui peuvent être, selon un mode de réalisation particulièrement préférentiel, dépourvus ou quasiment dépourvus de gomme de remplissage à leur périphérie ; par une telle expression, on entend qu'aucune particule de gomme de remplissage n'est visible, à l'oeil nu, à la périphérie du câble, c'est-à-dire que l'homme du métier ne fait pas de différence en sortie de fabrication, à l'oeil nu et à une distance de trois mètres ou plus, entre une bobine de câble conforme à l'invention et une bobine de câble conventionnel non gommé in situ.

Toutefois, comme indiqué précédemment, un éventuel débordement de la gomme de remplissage à la périphérie du câble ne sera pas préjudiciable à son adhésion ultérieure à une gomme de calandrage de tissu métallique, grâce au caractère co-réticulable de l'élastomère thermoplastique insaturé et de l'élastomère diénique de ladite gomme de calandrage.

L'invention s'applique bien entendu à des câbles du type compacts (pour rappel et par définition, ceux dont les couches C1 (si M est supérieur à 1), C2 et C3 sont enroulées au même pas et dans le même sens) comme à des câbles du type à couches cylindriques (pour rappel et par définition, ceux dont les couches C1 (si M est supérieur à 1), C2 et C3 sont enroulées soit à des pas différents (quels que soient leurs sens de torsion, identiques ou pas), soit dans des sens opposés (quels que soient leurs pas, identiques ou différents)).

Un dispositif d'assemblage et gommage utilisable préférentiellement pour la mise en oeuvre de ce procédé, est un dispositif comportant d'amont en aval, selon la direction d'avancement d'un câble en cours de formation :

- des moyens d'alimentation d'une part du ou des M fil(s) de la première couche ou noyau (C1), d'autre part des N fils de la deuxième couche (C2) ;

- des premiers moyens d'assemblage des N fils pour mise en place de la deuxième couche (C2) autour de la première couche (C1), en un point dit « point d'assemblage », pour formation d'un câble intermédiaire dit « toron d'âme » de construction M+N ;
- des seconds moyens d'assemblage des P fils autour du toron d'âme ainsi gainé, pour mise en place de la troisième couche (C3) ;
- des moyens d'extrusion délivrant l'élastomère thermoplastique à l'état fondu, disposés respectivement en amont et/ou en aval des premiers moyens d'assemblage, pour gainage du noyau et/ou du toron d'âme M+N.

Bien entendu, lorsque M est supérieur à 1, le dispositif ci-dessus comporte également des moyens d'assemblage des M fils de la couche centrale (C1) disposés entre les moyens d'alimentation de ces M fils et les moyens d'assemblage des N fils de la deuxième couche (C2). Dans le cas d'un double gainage (noyau et âme), les moyens d'extrusion sont donc disposés à la fois en amont et en aval des premiers moyens d'assemblage.

On voit sur la figure 3 un exemple de dispositif (30) d'assemblage par retordage, du type à alimentation fixe et à réception tournante, utilisable pour la fabrication d'un câble du type compact à un seul fil noyau ($p_2 = p_3$ et même sens de torsion des couches C2 et C3). Dans ce dispositif (30), des moyens d'alimentation (310) délivrent, autour d'un fil noyau unique (C1), N fils (31) à travers une grille (32) de répartition (répartiteur axisymétrique), couplée ou non à un grain d'assemblage (33), grille au-delà de laquelle convergent les N (par exemple six) fils de la deuxième couche en un point d'assemblage (34), pour formation du toron d'âme (C1+C2) de construction 1+N (par exemple 1+6).

Le toron d'âme (C1+C2), une fois formé, traverse ensuite une zone de gainage consistant par exemple en une tête d'extrusion unique (35) constituée par une extrudeuse bi-vis (alimentée par une trémie contenant l'élastomère TPE sous forme de granules) alimentant une filière de calibrage par l'intermédiaire d'une pompe. La distance entre le point de convergence (34) et le point de gainage (35) est par exemple comprise entre 50 cm et 1 m. Autour du toron d'âme ainsi gommé (36) et progressant dans le sens de la flèche, sont ensuite assemblés par retordage les P fils (37) de la couche externe (C3), par exemple au nombre de douze, délivrés par des moyens d'alimentation (370). Le câble final (M+N+P) ainsi formé est finalement collecté sur la réception tournante (39), après traversée de moyens d'équilibrage de torsion (38) consistant par exemple en un dresseur et/ou un retordeur-dresseur.

On rappelle ici que, de manière bien connue de l'homme du métier, pour la fabrication d'un câble du type à couches cylindriques (pas $p_2$ et $p_3$ différents et/ou sens de torsion différents des couches C2 et C3), on utilise un dispositif comportant deux organes (alimentation ou réception) tournants, et non un seul comme décrit ci-dessus (Fig. 3) à titre d'exemple.

II-3. Utilisation du câble en armature de carcasse de pneumatique

Comme expliqué en introduction du présent mémoire, le câble de l'invention est particulièrement destiné à une armature de carcasse de pneumatique pour véhicule industriel.

A titre d'exemple, la figure 4 représente de manière très schématique une coupe radiale d'un pneumatique à armature de carcasse métallique pouvant être conforme ou non à l'invention, dans cette représentation générale. Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles métalliques dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le pneumatique conforme à l'invention est caractérisé en ce que son armature de carcasse 7 comporte au moins, à titre d'élément de renforcement d'au moins une nappe de carcasse, un câble métallique conforme à l'invention. Bien entendu, ce pneumatique 1 comporte en outre de manière connue une couche de gomme ou élastomère intérieure (communément appelée "gomme intérieure") qui définit la face radialement interne du pneumatique et qui est destinée à protéger la nappe de carcasse de la diffusion d'air provenant de l'espace intérieur au pneumatique.

Dans cette nappe d'armature de carcasse, la densité des câbles conformes à l'invention est de préférence comprise entre 30 et 160 câbles par dm (décimètre) de nappe de carcasse, plus préférentiellement entre 50 et 100 câbles par dm de nappe, la distance entre deux câbles adjacents, d'axe en axe, étant de préférence comprise entre 0,6 et 3,5 mm, plus préférentiellement comprise entre 1,25 et 2,2 mm.

Les câbles conformes à l'invention sont de préférence disposés de telle manière que la largeur (notée Lc) du pont de caoutchouc, entre deux câbles adjacents, est comprise entre 0,25 et 1,5 mm. Cette largeur Lc représente de manière connue la différence entre le pas de calandrage (pas de pose du câble dans le tissu de caoutchouc) et le diamètre du câble. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques d'apparition de défauts d'aspect sur les flancs des pneumatiques ou de pénétration d'objets, par perforation, entre les câbles. Plus préférentiellement, pour ces mêmes raisons, la largeur Lc est choisie comprise entre 0,35 et 1,25 mm.

De préférence, la composition de caoutchouc utilisée pour le tissu de la nappe d'armature de carcasse présente, à l'état vulcanisé (i.e., après cuisson), un module sécant en extension E10 qui est compris entre 2 et 25 MPa, plus préférentiellement entre 3 et 20 MPa, notamment dans un domaine de 3 à 15 MPa.

## III. EXEMPLES DE REALISATION DE L'INVENTION

Les essais qui suivent démontrent la capacité de l'invention à fournir des câbles à trois couches qui, comparés aux câbles à trois couches gommés in situ de l'art antérieur avec un caoutchouc diénique conventionnel (non thermofusible), ont l'avantage notable de comporter une quantité réduite et contrôlée de gomme de remplissage, ce qui leur garantit une meilleure compacité, cette gomme étant en outre préférentiellement répartie uniformément à l'intérieur du câble, en particulier à l'intérieur de chacun de ses capillaires, leur conférant ainsi une imperméabilité longitudinale optimale ; en outre, cette gomme de remplissage a comme avantage essentiel d'être dépourvue de collant parasite à l'état cru (i.e., non réticulé).

III-1. Fabrication des câbles

On fabrique dans les essais qui suivent des câbles à couches de constructions 1+6+12 constitués de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm. L'acier utilisé est un acier au carbone connu (norme USA AISI 1069) dont la teneur en carbone est de 0,70%. Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuse. Le revêtement de laiton qui entoure les fils a une épaisseur très faible, nettement inférieure au micromètre, par exemple de l'ordre de 0,15 à 0,30 $\mu$m, ce qui est négligeable par rapport au diamètre des fils en acier.

Les fils en acier ainsi tréfilés ont le diamètre et les propriétés mécaniques suivantes :

**Tableau 1**

| Acier | $\phi$ (mm) | Fm (N) | Rm (MPa) |
|-------|-------------|--------|----------|
| NT | 0,18 | 68 | 2820 |
| NT | 0,20 | 82 | 2620 |

Ces fils sont ensuite assemblés sous forme de câbles à couches 1+6+12 dont la construction est conforme à la représentation de la figure 1 et dont les propriétés mécaniques sont données dans le tableau 2.

**Tableau 2**

| Câble | $p_2$ (mm) | $p_3$ (mm) | Fm (daN) | Rm (MPa) | At (%) |
|-------|-----------|-----------|----------|----------|--------|
| C-1 | 10 | 10 | 120 | 2550 | 2,4 |

Les câbles de l'invention 1+6+12 (C-1), tels que schématisés à la Fig. 1, sont donc formés de 19 fils au total, un fil noyau de diamètre 0,20 mm et 18 fils autour, tous de diamètre 0,18 mm, qui ont été enroulés en deux couches concentriques au même pas ($p_2 = p_3 = 10,0$ mm) et dans la même direction de torsion (S/S) pour l'obtention d'un câble du type compact. Le taux de gomme de remplissage, mesuré selon la méthode indiquée précédemment au paragraphe I-3, est égal à environ 18 mg par g de câble. Cette gomme de remplissage est présente dans chacun des 24 capillaires ou interstices formés par les différents fils pris trois à trois, c'est-à-dire qu'elle remplit en totalité ou au moins en partie chacun de ces capillaires de telle manière qu'il existe au moins, sur toute longueur de câble de longueur égale à 2 cm, un bouchon de gomme dans chaque capillaire ou interstice.

Pour la fabrication de ces câbles, on a utilisé un dispositif tel que décrit précédemment et schématisé à la figure 3, en gainant le toron d'âme (1+6) puis en assemblant par retordage la couche externe des 12 fils sur le toron d'âme gainé. Le toron d'âme a été ainsi recouvert d'une couche d'élastomère TPS d'environ 15 $\mu$m. La gomme de remplissage était constituée d'un élastomère TPS insaturé qui a été extrudé à une température de 180°C environ, au moyen d'une extrudeuse bi-vis (longueur 960 mm, L/D = 40) alimentant une filière de calibrage de diamètre 0,570 mm par l'intermédiaire d'une pompe ; le toron d'âme (1+6) se déplaçait pendant son gainage perpendiculairement à la direction d'extrusion et de façon rectiligne.

Trois élastomères TPS insaturés (produits commerciaux) ont été testés lors de ces essais : un copolymère blocs SBS (blocs styrène-butadiène-styrène), un copolymère blocs SIS (blocs styrène-isoprène-styrène) et un copolymère blocs S(SB)S (blocs styrène-butadiène-styrène dont le bloc polydiène central (noté SB) était un copolymère diène statistique styrène-butadiène), de dureté Shore A respectivement égale à environ 70, 25 et 90.

III-2. Tests de perméabilité à l'air

Puis les câbles C-1 de l'invention ainsi fabriqués ont été soumis au test de perméabilité à l'air décrit au paragraphe I-2, en mesurant le volume d'air (en cm$^3$) traversant les câbles en 1 minute (moyenne de 10 mesures pour chaque câble testé).

Pour chaque câble C-1 testé et pour 100% des mesures (soit dix éprouvettes sur dix), quel que soit l'élastomère TPS testé, on a mesuré un débit nul ou inférieur à 0,2 cm$^3$/min ; en d'autres termes, les câbles de l'invention peuvent être qualifiés d'étanches à l'air selon leur axe longitudinal.

D'autre part, des câbles gommés in situ témoins, de même construction que les câbles compacts C-1 de l'invention mais gommés in situ par une composition de caoutchouc diénique conventionnelle (caoutchouc naturel), ont été préparés conformément au procédé décrit dans la demande WO 2005/071557 précitée, en plusieurs étapes discontinues, par gainage via une tête d'extrusion du toron d'âme intermédiaire 1+6, puis dans un deuxième temps par câblage des 12 fils restants autour de l'âme ainsi gainée, pour formation de la couche externe. Ces câbles témoins ont été ensuite soumis au test de perméabilité à l'air du paragraphe I-2.

On a constaté tout d'abord qu'aucun de ces câbles témoins ne présentait 100% des mesures (soit dix éprouvettes sur dix) avec un débit nul ou inférieur à 0,2 cm$^3$/min, en d'autres termes qu'aucun de ces câbles témoins ne pouvait être qualifié d'étanche (totalement étanche) à l'air selon son axe. On a observé d'autre part que, parmi ces câbles témoins, ceux présentant les meilleurs résultats d'imperméabilité (soit un débit moyen d'environ 2 cm$^3$/min), présentaient tous une quantité relativement importante de gomme de remplissage parasite débordant à leur périphérie, les rendant inaptes à une opération de calandrage satisfaisante en conditions industrielles, en raison du collant parasite de la gomme de remplissage.

En conclusion, le câble conforme à l'invention présente donc un taux de pénétration optimal par l'élastomère thermoplastique insaturé, avec une quantité de gomme de remplissage maîtrisée, qui garantit la présence de cloisons internes (continues ou discontinues dans l'axe du câble) ou bouchons de gomme dans les capillaires ou interstices en un nombre suffisant ; ainsi, le câble de l'invention devient étanche à la propagation, le long du câble, de tout fluide corrosif tel que l'eau ou l'oxygène de l'air, supprimant ainsi l'effet de mèche décrit en introduction du présent mémoire.

En outre, l'élastomère thermoplastique utilisé ne pose pas de problème de collant parasite en cas d'un léger débordement à l'extérieur du câble après sa fabrication ; en cas de débordement son caractère insaturé et donc (co)vulcanisable le rend compatible avec une matrice environnante d'élastomère diénique insaturé tel que caoutchouc naturel.

Bien entendu, l'invention n'est pas limitée aux exemples de réalisation précédemment décrits.

C'est ainsi par exemple que le noyau (C1) des câbles de l'invention pourrait être constituée d'un fil à section non circulaire, par exemple déformé plastiquement, notamment un fil de section sensiblement ovale ou polygonale, par exemple triangulaire, carrée ou encore rectangulaire ; le noyau pourrait aussi être constitué d'un fil préformé, de section circulaire ou non, par exemple un fil ondulé, vrillé, tordu en forme d'hélice ou en zig-zag. Dans de tels cas, il faut bien sûr comprendre que le diamètre $d_c$ du noyau (C1) représente le diamètre du cylindre de révolution imaginaire qui entoure le fil central (diamètre d'encombrement), et non plus le diamètre (ou toute autre taille transversale, si sa section n'est pas circulaire) du fil central lui-même.

Pour des raisons de faisabilité industrielle, de coût et de performance globale, on préfère toutefois mettre en oeuvre l'invention avec un seul fil central (couche C1) linéaire conventionnel, de section circulaire.

D'autre part, le fil central étant moins sollicité lors de la fabrication du câble que les autres fils, compte tenu de sa position dans le câble, il n'est pas nécessaire pour ce fil d'employer par exemple des compositions d'acier offrant une ductilité en torsion élevée ; on pourra avantageusement utiliser tout type d'acier, par exemple un acier inoxydable.

En outre, un (au moins un) fil linéaire d'une des deux autres couches (C2 et/ou C3) pourrait lui aussi être remplacé par un fil préformé ou déformé, ou plus généralement par un fil de section différente de celle des autres fils de diamètre $d_2$ et/ou $d_3$, de manière par exemple à améliorer encore la pénétrabilité du câble par le caoutchouc ou toute autre matière, le diamètre d'encombrement de ce fil de remplacement pouvant être inférieur, égal ou supérieur au

diamètre ($d_2$ et/ou $d_3$) des autres fils constitutifs de la couche (C2 et/ou C3) concernée.

Sans que l'esprit de l'invention soit modifié, une partie des fils constituant le câble conforme à l'invention pourrait être remplacé par des fils autres que des fils en acier, métalliques ou non, notamment des fils en matière minérale ou organique à haute résistance mécanique, par exemple des monofilaments en polymères organiques cristaux liquides.

L'invention concerne également tout câble d'acier multitorons *("multistrand rope")* dont la structure incorpore au moins, en tant que toron élémentaire, un câble à couches conforme à l'invention.

A titre d'exemples de câbles multitorons conformes à l'invention, utilisables par exemple dans des pneumatiques pour véhicules industriels du type génie civil, notamment dans leur armature carcasse ou sommet, on peut citer des câbles multitorons de construction générale connue en soi (M étant égal à 1, 2, 3 ou 4 ; N variant de 5 à 15, P variant de 10 à 22) :

- (1+5) (M+N+P) formé au total de six torons élémentaires, un toron au centre et les cinq autres torons câblés autour du centre ;
- (1+6) (M+N+P) formé au total de sept torons élémentaires, un toron au centre et les six autres torons câblés autour du centre ;
- (2+7) (M+N+P) formé au total de neuf torons élémentaires, deux torons au centre et les sept autres torons câblés autour du centre ;
- (2+8) (M+N+P) formé au total de dix torons élémentaires, deux torons au centre et les huit autres torons câblés autour du centre ;
- (3+8) (M+N+P) formé au total de onze torons élémentaires, trois torons au centre et les huit autres câblés autour du centre ;
- (3+9) (M+N+P) formé au total de douze torons élémentaires, trois au centre et les neuf autres câblés autour du centre ;
- (4+9) (M+N+P) formé au total de treize torons élémentaires, trois au centre et les neuf autres torons câblés autour du centre ;
- (4+10) (M+N+P) formé au total de quatorze torons élémentaires, quatre torons au centre et les dix autres torons câblés autour du centre,

mais dans lesquels chaque toron élémentaire (ou tout au moins une partie d'entre eux) constitué par un câble à trois couches M+N+P, notamment 1+6+11, 1+6+12, 3+8+14, 3+9+15, 4+10+16, du type compact comme du type à couches cylindriques, est un câble conforme à l'invention.

De tels câbles d'acier multitorons à deux couches, par exemple du type :

- (1+6)(1+6+11), (2+7)(1+6+11), (2+8)(1+6+11), (3+8)(1+6+11), (3+9)(1+6+11), (4+9)(1+6+11), ou (4+10)(1+6+11) ;
- (1+6)(1+6+12), (2+7)(1+6+12), (2+8)(1+6+12), (3+8)(1+6+12), (3+9)(1+6+12), (4+9)(1+6+12) ou (4+10)(1+6+12) ;
- (1+6)(3+8+14), (2+7)(3+8+14), (2+8)(3+8+14), (3+8)(3+8+14), (3+9)(3+8+14), (4+9)(3+8+14) ou (4+10)(3+8+14) ;
- (1+6)(3+9+15), (2+7)(3+9+15), (2+8)(3+9+15), (3+8) (3+9+15), (3+9) (3+9+15), (4+9) (3+9+15) ou (4+10)(3+9+15) ;
- (1+6)(4+10+16), (2+7)(4+10+16), (2+8)(4+10+16), (3+8)(4+10+16), (3+9)(4+10 +16), (4+9)(4+10+16) ou (4+10)(4+10+16),

pourraient être eux-mêmes gommés in situ lors de leur fabrication, c'est-à-dire que le noyau ou toron d'âme central de ces câbles multitorons pourrait être lui-même gainé par un caoutchouc tel qu'un élastomère thermoplastique TPE, notamment TPS, saturé ou insaturé, ou encore par un élastomère diénique conventionnel (e.g. caoutchouc naturel) tel que ceux utilisés dans les câbles gommés in situ de l'art antérieur.

**Revendications**

1. Câble métallique à trois couches concentriques (C1, C2, C3) de construction M+N+P, comportant une première couche ou noyau (C1) de diamètre $d_c$ constitué de M fil(s) de diamètre $d_1$, noyau autour duquel sont entourés ensemble en hélice selon un pas $p_2$, en une deuxième couche (C2), N fils de diamètre $d_2$, deuxième couche autour de laquelle sont entourés ensemble en hélice selon un pas $p_3$, en une troisième couche (C3), P fils de diamètre $d_3$, dans lequel au moins une partie des interstices du câble, situés d'une part entre le noyau et les N fils de la deuxième couche ainsi qu'entre les fils noyau eux-mêmes lorsque M est supérieur à 1, d'autre part entre les N fils de la deuxième couche et les P fils de la troisième couche, contiennent du caoutchouc ou une composition de caoutchouc, **caractérisé en ce que** ledit caoutchouc est un élastomère thermoplastique insaturé.

2. Câble selon la revendication 1, dans lequel l'élastomère thermoplastique insaturé est un élastomère thermoplastique styrénique ("TPS").

**3.** Câble selon la revendication 2, dans lequel l'élastomère TPS insaturé comporte des blocs polystyrène et des blocs polydiène.

**4.** Câble selon la revendication 3, dans lequel les blocs polydiène sont choisis dans le groupe constitué par les blocs polyisoprène, les blocs polybutadiène et les mélanges de tels blocs.

**5.** Câble selon la revendication 4, dans lequel l'élastomère TPS est un copolymère choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

**6.** Câble selon l'une quelconque des revendications 1 à 5, tel que sur toute longueur de câble de 2 cm, l'élastomère TPS est présent dans chacun des interstices ou capillaires situés d'une part entre le noyau (C1) et les N fils de la seconde couche (C2) ainsi qu'entre les fils noyau eux-mêmes lorsque M est supérieur à 1, d'autre part entre les N fils de la seconde couche (C2) et les P fils de la troisième couche (C3).

**7.** Câble selon l'une quelconque des revendications 1 à 6, dans lequel le taux d'élastomère thermoplastique est compris entre 5 et 40 mg par gramme de câble.

**8.** Câble selon l'une quelconque des revendications 1 à 7, **caractérisé en ce que**, au test de perméabilité à l'air, il présente un débit d'air moyen inférieur à 2 cm$^3$/min, de préférence inférieur ou au plus égal à 0,2 cm$^3$/min.

**9.** Câble selon l'une quelconque des revendications 1 à 8, dans lequel M est compris dans un domaine de 1 à 4, N est compris dans un domaine de 5 à 15, et P est compris dans un domaine de 10 à 22.

**10.** Câble selon la revendication 9, dans lequel le noyau M est égal à 1, N est compris dans un domaine de 5 à 7, et P est compris dans un domaine de 10 à 14.

**11.** Câble selon l'une quelconque des revendications 1 à 10, dans lequel les caractéristiques suivantes sont vérifiées ($d_1$, $d_2$, $d_3$, $p_2$ et $p_3$ étant exprimés en mm) :

  - $0,08 \leq d_1 \leq 0,40$ ;
  - $0,08 \leq d_2 \leq 0,35$ ;
  - $0,08 \leq d_3 \leq 0,35$ ;
  - $5 \pi (d_1 + d_2) < p_2 \leq p_3 < 10 \pi (d_1 + 2d_2 + d_3)$.

**12.** Câble multitorons dont au moins un des torons est un câble selon l'une quelconque des revendications 1 à 11.

**13.** Utilisation d'un câble selon l'une quelconque des revendications 1 à 12, pour le renforcement d'un article fini ou d'un produit semi-fini en caoutchouc.

**14.** Utilisation selon la revendication 13, dans laquelle l'article fini en caoutchouc est un pneumatique.

**15.** Pneumatique comportant un câble selon l'une quelconque des revendications 1 à 12.

**Patentansprüche**

**1.** Metallcord mit drei konzentrischen M+N+P-Aufbauschichten (C1, C2, C3), die eine erste Schicht oder Kernschicht (C1) mit Durchmesser $d_c$ umfasst, die aus M Fasern mit Durchmesser $d_1$ gebildet ist, wobei der Kern insgesamt von N Fasern mit Durchmesser $d_2$ schraubenlinienförmig mit Steigung $p_2$ in einer zweiten Schicht (C2) umgeben ist, wobei die zweite Schicht insgesamt von P Fasern mit Durchmesser $d_3$ schraubenlinienförmig mit Steigung $p_3$ in einer dritten Schicht (C3) umgeben ist, wobei wenigstens einige der Zwischenräume des Cords, die sich einerseits zwischen dem Kern und den N Fasern der zweiten Schicht sowie zwischen den Kernfasern selbst, wenn M größer als 1 ist, und andererseits zwischen den N Fasern der zweiten Schicht und den P Fasern der dritten Schicht befinden, Kautschuk oder eine Kautschukzusammensetzung enthalten, **dadurch gekennzeichnet, dass** der Kautschuk ein ungesättigtes thermoplastisches Elastomer ist.

**2.** Cord nach Anspruch 1, wobei das ungesättigte thermoplastische Elastomer ein thermoplastisches Styrol-Elastomer ("TPS") ist.

3. Cord nach Anspruch 2, wobei das ungesättigte TPS-Elastomer Polystyrol-Blöcke und Polydien-Blöcke umfasst.

4. Cord nach Anspruch 3, wobei die Polydien-Blöcke aus der Gruppe gewählt sind, die durch Polyisopren-Blöcke, Polybutadien-Blöcke und Gemische solcher Blöcke gebildet ist.

5. Cord nach Anspruch 4, wobei das TPS-Elastomer ein Copolymer ist, das aus der Gruppe gewählt ist, die durch Styrol/Butadien/Styrol-Copolymerblöcke (SBS), Styrol/Butadien/Butylen/Styrol-Copolymerblöcke (SBBS), Styrol/Isopren/Styrol-Copolymerblöcke (SIS), Styrol/Butadien/Isopren/Styrol-Copolymerblöcke (SBIS) und Gemische dieser Copolymere gebildet ist.

6. Cord nach einem der Ansprüche 1 bis 5, derart, dass auf der gesamten Länge des Cords von 2 cm das TPS-Elastomer in jedem der Zwischenräume oder Kapillare vorhanden ist, die sich einerseits zwischen dem Kern (C1) und den N Fasern der zweiten Schicht (C2) sowie zwischen den Kernfasern selbst, wenn M größer als 1 ist, und andererseits zwischen den N Fasern der zweiten Schicht (C2) und den P Fasern der dritten Schicht (C3) befinden.

7. Cord nach einem der Ansprüche 1 bis 6, wobei der Anteil des thermoplastischen Elastomers im Bereich von 5 bis 40 mg pro Gramm des Cords liegt.

8. Cord nach einem der Ansprüche 1 bis 7, **dadurch gekennzeichnet, dass** er im Luftpermeabilitätstest einen mittleren Luftdurchsatz von weniger als 2 $cm^3$/min, vorzugsweise kleiner oder gleich 0,2 $cm^3$/min, aufweist.

9. Cord nach einem der Ansprüche 1 bis 8, wobei M in einem Bereich von 1 bis 4 liegt, N in einem Bereich von 5 bis 15 liegt und P in einem Bereich von 10 bis 22 liegt.

10. Cord nach Anspruch 9, wobei der Kern M gleich 1 ist, N in einem Bereich von 5 bis 7 liegt und P in einem Bereich von 10 bis 14 liegt.

11. Cord nach einem der Ansprüche 1 bis 10, wobei die folgenden Eigenschaften verifiziert werden (wobei $d_1$, $d_2$, $d_3$, $p_2$ und $p_3$ in mm gegeben sind) :

   - $0{,}08 \leq d_1 \leq 0{,}40$;
   - $0{,}08 \leq d_2 \leq 0{,}35$;
   - $0{,}08 \leq d_3 \leq 0{,}35$;
   - $5\pi(d_1 + d_2) < p_2 \leq p_3 < 10\pi(d_1 + 2d_2 + d_3)$.

12. Mehrfachlitzencord, wovon wenigstens eine der Litzen ein Cord nach einem der Ansprüche 1 bis 11 ist.

13. Verwendung eines Cords nach einem der Ansprüche 1 bis 12 für die Verstärkung eines fertigen Artikels oder eines halbfertigen Produkts aus Kautschuk.

14. Verwendung nach Anspruch 13, wobei der fertige Artikel aus Kautschuk ein Luftreifen ist.

15. Luftreifen, der einen Cord nach einem der Ansprüche 1 bis 12 umfasst.

**Claims**

1. Metal cord with three concentric layers (C1, C2, C3) of M+N+P construction, comprising a first layer or core (C1) of diameter $d_c$ made up of M wire(s) of diameter $d_1$, around which core are wound together as a helix at a pitch $p_2$, as a second layer (C2), N wires of diameter $d_2$, around which second layer are wound together as a helix at a pitch $p_3$, as a third layer (C3), P wires of diameter $d_3$, in which at least some of the gaps in the cord, situated on the one hand between the core and the N wires of the second layer and between the core wires themselves when M is greater than 1 and, on the other hand, between the N wires of the second layer and the P wires of the third layer, contain rubber or a rubber composition, **characterized in that** the said rubber is an unsaturated thermoplastic elastomer.

2. Cord according to Claim 1, in which the unsaturated thermoplastic elastomer is a thermoplastic styrene (TPS) elastomer.

3. Cord according to Claim 2, in which the unsaturated TPS elastomer comprises polystyrene blocks and polydiene blocks.

4. Cord according to Claim 3, in which the polydiene blocks are selected from the group consisting of polyisoprene blocks, polybutadiene blocks and mixtures of such blocks.

5. Cord according to Claim 4, in which the TPS elastomer is a copolymer selected from the group consisting of styrene/butadiene/styrene (SBS), styrene/butadiene/butylene/styrene (SBBS), styrene/isoprene/styrene (SIS) and styrene/butadiene/isoprene/styrene (SBIS) block copolymers and blends of these copolymers.

6. Cord according to any one of Claims 1 to 5, such that over any 2 cm length of cord, the TPS elastomer is present in each of the gaps or capillaries situated on the one hand, between the core (C1) and the N wires of the second layer (C2) and between the core wires themselves when M is greater than 1 and, on the other hand, between the N wires of the second layer (C2) and the P wires of the third layer (C3).

7. Cord according to any one of Claims 1 to 6, in which the thermoplastic elastomer content is comprised between 5 and 40 mg per gram of cord.

8. Cord according to any one of Claims 1 to 7, **characterized in that**, in an air permeability test, it has a mean air flow rate of less than 2 $cm^3$/min, preferably less than or at most equal to 0.2 $cm^3$/min.

9. Cord according to any one of Claims 1 to 8, in which M is comprised in a range from 1 to 4, N is comprised in a range from 5 to 15, and P is comprised in a range from 10 to 22.

10. Cord according to Claim 9, in which the core M is equal to 1, N is comprised in a range from 5 to 7, and P is comprised in a range from 10 to 14.

11. Cord according to any one of Claims 1 to 10, in which the following characteristics are satisfied ($d_1$, $d_2$, $d_3$, $p_2$ and $p_3$ being expressed in mm):

    - $0.08 < d_1 \leq 0.40$;
    - $0.08 < d_2 \leq 0.35$;
    - $0.08 < d_3 \leq 0.35$;
    - $5 \pi (d_1 + d_2) < p_2 \leq p_3 < 10 \pi (d_1 + 2d_2 + d_3)$.

12. Multistrand rope at least one of the strands of which is a cord according to any one of Claims 1 to 11.

13. Use of a cord according to any one of Claims 1 to 12 for reinforcing a finished article or a semi-finished product made of rubber.

14. Use according to Claim 13, in which the finished article made of rubber is a tyre.

15. Tyre comprising a cord according to any one of Claims 1 to 12.

## Fig. 1

## Fig. 2

## Fig. 3

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005071157 A
- WO 9841682 A
- EP 976541 A
- WO 03048447 A
- WO 2005071557 A